# EUROPÄISCHE PATENTSCHRIFT

(11) **EP 1 249 192 B1**
(45) Veröffentlichungstag und Bekanntmachung des Hinweises auf die Patenterteilung: **04.04.2007**
(21) Anmeldenummer: 02000742.3
(22) Anmeldetag: 12.01.2002
(51) Int. Cl.: A47C 4/02, A47C 3/34, F16B 7/10

(54) **Stuhl**
Chair
Chaise

(30) Priorität: 14.04.2001 DE 10118666
(43) Veröffentlichungstag der Anmeldung: 16.10.2002
(73) Patentinhaber: moll Funktionsmöbel GmbH, 73344 Gruibingen (DE)
(72) Erfinder: Looser, Hans, 73117 Wangen (DE)
(74) Vertreter: Reimold, Otto

(56) Entgegenhaltungen:
- DE-A- 4 417 198
- FR-A- 1 325 961
- US-A- 5 547 253
- US-A- 5 688 067

## Beschreibung

Die Erfindung betrifft einen Stuhl, mit einem Fußteil, an dem ein Steckstutzen angeordnet ist, und einer vom Fußteil hochstehenden Tragsäule zum, insbesondere höhenverstellbaren, Halten einer Sitzeinrichtung, wobei die Tragsäule mit dem Steckstutzen zusammengesteckt und mittels Spannmittel von au-ßen her lösbar am Steckstutzen festgelegt ist.

Ein aus der Praxis bekannter Stuhl stellt eine unveränderliche Einheit dar und wird seitens des Herstellers und des Lieferanten als Ganzes gelagert und, auch vom Kunden, transportiert. Dies erfordert verhältnismäßig viel Platz.

Bei einem aus der US-A-5 547 253 bekannten Stuhl der eingangs genannten Art kann die Tragsäule dagegen vom Fußteil entfernt werden. Der so zerlegte Stuhl ist weniger sperrig, so dass er sich einfacher lagern und transportieren lässt. Die Montage kann, da sie von außen her erfolgt, auch vom Kunden vorgenommen werden.

Der vorliegenden Erfindung liegt die Aufgabe zu Grunde, einen Stuhl der eingangs genannten Art mit einer stabilen Verbindung zwischen Fußteil und Tragsäule zu schaffen.

Diese Aufgabe wird erfindungsgemäß dadurch gelöst, dass die Tragsäule auf den Steckstutzen gesteckt ist, dass die Spannmittel an der Tragsäule gelagert sind, die Tragsäule durchgreifen, einseitig am Steckstutzen angreifen und den Steckstutzen mit der Innenseite der Tragsäule verspannen, und dass der Steckstutzen an seinem im Querschnitt der Angriffsseite der Spannmittel entgegengesetzten Endbereich eine sich zum Ende hin verjüngende Gestalt aufweist, wobei sich die Innenseite der Tragsäule in ähnlicher weise verjüngt, so dass sich der Steckstutzen beim Verspannen in der Tragsäule verkeilt.

Ein Ausführungsbeispiel der Erfindung wird nun anhand der Zeichnung beschrieben. Es zeigen:
- Figur 1: einen erfindungsgemäßen Stuhl in schematischer Seitenansicht,
- Figur 2: den Steckstutzen mit der aufgesteckten Tragsäule, die abgeschnitten gezeichnet ist, in gesonderter, vergrößerter Darstellung im zur Zeichenebene der Figur 1 parallelen Vertikalschnitt gemäß der Schnittlinie II-II in Figur 3 und
- Figur 3: die Anordnung nach Figur 2 im Querschnitt gemäß der Schnittlinie III-III in den Figuren 1 und 2.

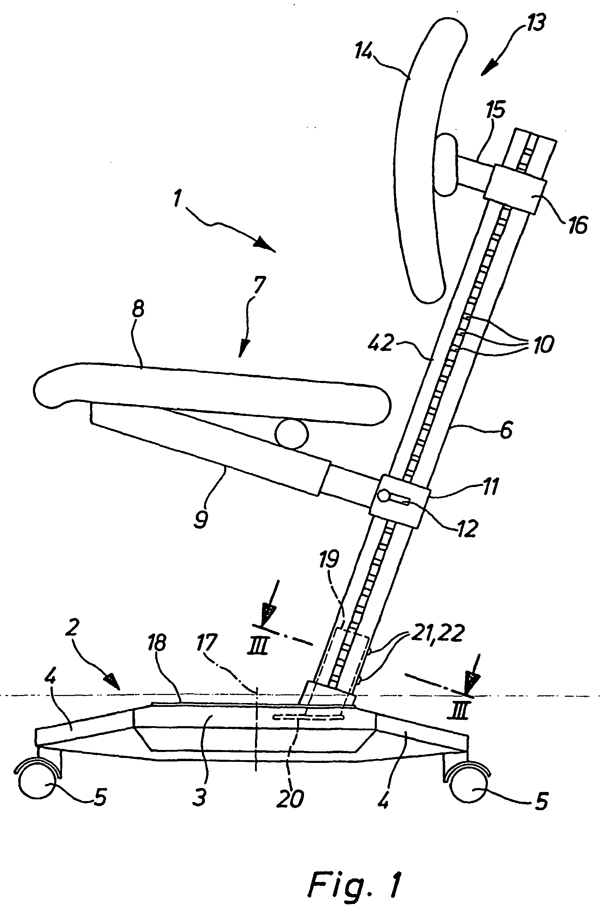

Der aus Figur 1 insgesamt hervorgehende Stuhl 1 enthält ein Fußteil 2, dessen Aussehen im Einzelnen im vorliegenden Zusammenhang von untergeordneter Bedeutung ist. Beim Ausführungsbeispiel weist es einen in Draufsicht scheibenförmigen Zentralkörper 3 auf, von dem in radialer Richtung Haltearme 4 abstehen, an deren Unterseite jeweils eine schwenkbare Fahrrolle 5 angeordnet ist, so dass der Stuhl auf dem Umgebungsboden verfahren werden kann. In Fig. 1 sind nur zwei der in Wirklichkeit fünf Fahrrollen eingezeichnet.

Im rückwärtigen Bereich des Stuhls steht vom Fußteil 2 eine Tragsäule 6 nach oben hin ab. Die Tragsäule 6 hält eine Sitzeinrichtung 7, wobei der eigentliche Sitz 8 an einem Befestigungsarm 9 der Sitzeinrichtung 7 angeordnet ist, der in Höhenrichtung längs der Tragsäule 6 verstellbar mit der Tragsäule 6 verbunden ist. Die höhenverstellbare Befestigung kann auf unterschiedliche Weise ausgeführt werden. Beim dargestellten Stuhl weist die Tragsäule 6 eine seitlich an ihr angeordnete, sich in ihrer Längsrichtung erstreckende Reihe von Rastlöchern 10 auf, an denen der Befestigungsarm 9 verrastet werden kann. Der Befestigungsarm 9 weist eine die Tragsäule 6 manschettenartig umfassende Verbindungshüle 11 auf, an der ein Betätigungshebel 12 gelagert ist, der an seiner dem Betrachter abgewandten Unterseite einen die Verbindungshülse 11 durchgreifenden, mit den Rastlöchern 10 zusammenwirkenden Rastkörper aufweist.

Oberhalb der Sitzeinrichtung 7 sitzt an der Tragsäule 6 noch eine Lehneneinrichtung 13 mit einer Rückenlehne 14, gegen die sich eine auf dem Sitz 8 sitzende Person mit ihrem Rücken lehnen kann. Die Rückenlehne 14 ist, ähnlich wie der Sitz 8, über einen Befestigungsarm 15 und eine auf die Tragsäule 6 aufgesteckte und in der gewünschten Höhe festlegbare Verbindungshülse 16 mit der Tragsäule 6 verbunden.

Die Tragsäule 6 weist eine lineare Gestalt auf, so dass die Sitzeinrichtung 7 und die Lehneneinrichtung 13 praktisch über die gesamte Länge der Tragsäule 6 hinweg verstellt werden können. Dabei steht die Tragsäule 6 mit einer nach hinten gerichteten Neigung von dem Fußteil 2 hoch. Dies könnte jedoch auch anders sein.

Das Fußteil 2 enthält einen um die Zentralachse 17 des Fußteils 2 verdrehbaren Drehkörper 18. Die Tragsäule 6 ist exzentrisch zur Zentralachse 17 mit dem Drehkörper 18 verbunden, so dass sie beim Verdrehen des Drehkörpers 18 eine Kreisbewegung um die Zentralachse 17 ausführt. Auf diese Weise kann die auf dem Stuhl sitzende Person ihre Sitzrichtung verändern.

Der dargestellte Stuhl 1 ist zerlegbar, so dass er beim Lagern und Transportieren weniger sperrig ist. Hierzu ist am Fußteil 2 ein in Längsrichtung der Tragsäule 6 ein kurzes Stück weit hochstehender Steckstutzen 19 angeordnet, auf den die Tragsäule 6 aufgesteckt ist. Dabei ist die Tragsäule von außen her lösbar am Steckstutzen 19 festgelegt, so dass sie nach Lösen der Verbindung vom Steckstutzen 19 abgezogen werden kann.

Falls ein weiteres Zerlegen gewünscht ist, können auch noch die Sitzeinrichtung 7 und die Lehneneinrichtung 13 von der Tragsäule 6 entfernt werden.

Der Steckstutzen 19 ist in geeigneter Weise am Fußteil 2 festgelegt. Beim Ausführungsbeispiel ist am unteren Ende des Steckstutzens 19 eine Befestigungsplatte 20 angeordnet, die ihrerseits am Fußteil 2 befestigt ist. Dabei befindet sich die Befestigungsplatte 20 beim Ausführungsbeispiel innerhalb des Fußteils 2, so dass sie von außen her nicht sichtbar ist. Weist das Fußteil 2, wie beim Ausführungsbeispiel, einen Drehkörper 18 auf, befindet sich der Steckstutzen 19 am Drehkörper.

Sowohl die Tragsäule 6 als auch der Steckstutzen 19 sind hohl ausgebildet.

Das Festlegen der Tragsäule 6 am Steckstutzen 19 erfolgt mit Hilfe von an der Tragsäule 6 gelagerten und die Tragsäule 6 durchgreifenden Spannmitteln 21, die von außen her zugänglich sind. Dabei greifen die Spannmittel 21 am Steckstutzen 19 an und verspannen den Steckstutzen 19 mit der Innenseite der Tragsäule 6.

Die Spannmittel 21 werden zweckmäßigerweise von mindestens einer gegen den Steckstutzen 19 drückenden Spannschraube 22 gebildet. Beim Ausführungsbeispiel sind zwei in Längsrichtung der Tragsäule 6 mit Abstand zueinander angeordnete Spannschrauben 22 vorhanden. Prinzipiell könnte bereits eine solche Spannschraube genügen.

Die Spannschrauben 22 stehen in Gewindeeingriff mit der Tragsäule 6 und können zum Verspannen der Tragsäule 6 auf dem Steckstutzen 19 gegen den Steckstutzen 19 vorgeschraubt werden. Zum Wegnehmen der Tragsäule 6 vom Steckstutzen 19 werden die Spannschrauben 22 in entgegengesetzter Richtung verdreht.

Aus Stabilitätsgründen ist die Tragsäule 6 an der Stelle der Spannschrauben 22 verstärkt. Hierzu kann die Tragsäule 6 einen beispielsweise durch Verschweißen fest mit ihr verbundenen Versteifungsstab 23 enthalten, der sich zumindest über die Spannschrauben 22 hinweg erstreckt.

Prinzipiell könnten mehrere über den Umfang verteilt angeordnete Spannmittel vorhanden sein. Zweckmäßigerweise greifen die Spannmittel 21 jedoch nur einseitig (Angriffsseite 24) am Steckstutzen 19 an, wobei der Steckstutzen 19 an seinem im Querschnitt der Angriffsseite 24 entgegengesetzten Endbereich 25 eine sich zum Ende hin verjüngende Gestalt aufweist. Dabei verjüngt sich die Innenseite der Tragsäule 6 im dem Steckstutzen-Endbereich 25 benachbarten Bereich in ähnlicher Weise. Beim Verspannen, wenn die Spannmittel 21 angezogen werden, wird der Steckstutzen 19 innerhalb der Tragsäule 6 in Richtung gemäß Pfeil 26 gedrückt, so dass sich sein Endbereich 25 in der sich im Querschnitt entsprechend verjüngenden Tragsäule 6 sozusagen verkeilt. Dies ergibt nicht nur eine großflächige Pressung zwischen Tragsäule und Steckstutzen sondern auch eine Zentrierung des Steckstutzens. Die Anordnung ist diesbezüglich symmetrisch mit Bezug auf die Querschnittsebene II-II.

Beim Ausführungsbeispiel weist die Tragsäule 6 einen im wesentlichen oval- oder ellipsenartigen Querschnitt auf, wobei die Spannmittel 21 an einem der beiden Hauptscheitel, d.h. am betreffenden Ende des größten Durchmessers der Tragsäule, zweckmäßigerweise am rückwärtigen Hauptscheitel, gelagert sind. Dementsprechend sind die beiden seitlichen Wandabschnitte 27,28 des Steckstutzen-Endbereichs 25 leicht gewölbt, so dass sie sich an die Tragsäulen-Innenseite anschmiegen.

Der der Angriffsseite 24 entgegengesetzte Endbereich 25 des Steckstutzens 19 endet mit Abstand vor dem zugewandten Wandabschnitt der Tragsäule 6, so dass dem Steckstutzenende ein Zwischenraum 29 vorgelagert ist. Auf diese Weise wird das keilartige Verspannen nicht behindert.

Eine weitere zweckmäßige Maßnahme besteht darin, dass der Steckstutzen 19 an seiner Angriffsseite 24 beiderseits der Spannmittel 21 jeweils einen im Querschnitt schräg oder gebogen verlaufenden Wandabschnitt 30, 31 aufweist, so dass bei wirksamen Spannmitteln 21, d.h. wenn die Spannschrauben 22 in Richtung gemäß Pfeil 26 gegen die Angriffsseite 24 drücken, der Steckstutzen 19 beiderseits der Spannmittel 21 durch Spreizwirkung gegen die Innenseite der Tragsäule 6 gedrückt wird. Die Angriffsseite 24 des Steckstutzens 19 ist also zum Spannmittel 21 hin ausgebaucht oder ausgewinkelt, so dass die von den Spannschrauben 22 augeübte Kraft die Wandabschnitte 30,31 nach seitlich außen drückt, so dass sich die an die endseitigen Wandabschnitte 30,31 anschließenden Wandabschnitte 32,33 des Steckstutzens 19, die der Tragsäulen-Innenseite entsprechend konturiert sind, gegen diese gepresst werden. Auf diese Weise erhält man auch hier eine stabile, wackelfreie Verbindung, so dass sich insgesamt ein stabiler, unverrückbarer Halt der Tragsäule 6 auf dem Steckstutzen 19 ergibt.

In diesem Zusammmenhang ist es vorteilhaft, dass der Steckstutzen 19 an seiner Angriffsseite 24 in Höhenrichtung längsgeschlitzt ist (Schlitz 34). Dies begünstigt die Spreizwirkung.

Beim Festziehen der Spannschrauben 22 können diese den Steckstutzen 19 an seiner Angriffsseite 24 etwas eindellen. Diese Dellen stellen eine zusätzliche Sicherheit gegen ein unabsichtliches Abziehen der Tragsäule 6 vom Steckstutzen 19 dar, wenn sich die Spannschrauben 22 unabsichtlich etwas gelockert haben sollten.

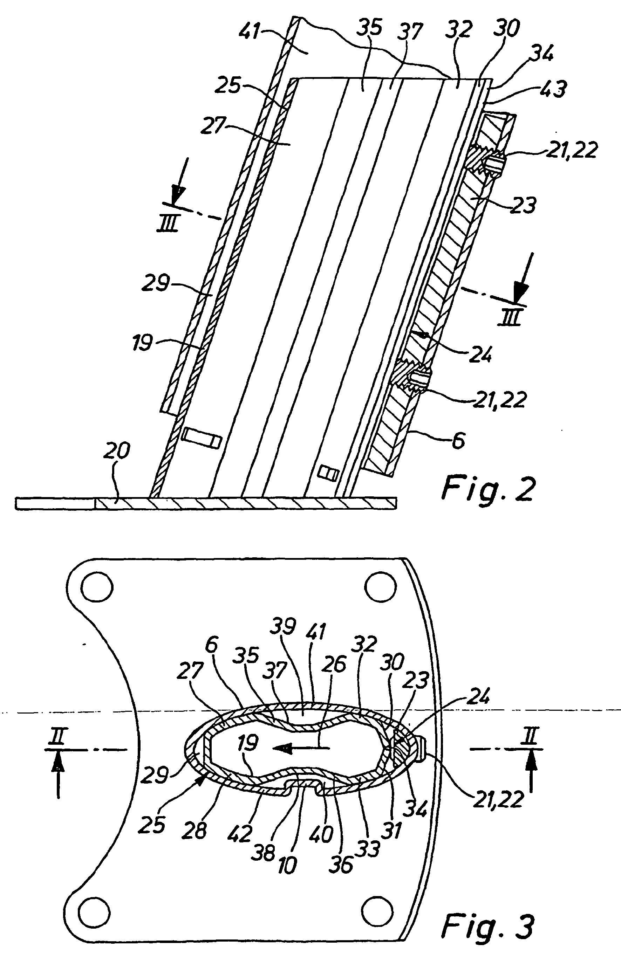

Aus Fig. 3 geht ferner hervor, dass die beiden Steckstutzenseiten 35,36, die von der Angriffsseite 24 zum entgegengesetzten Ende des Steckstutzens 19 verlaufen, in ihrem mittleren Bereich 37 bzw. 38 eingebaucht sind, so dass ein Abstand und somit ein Zwischenraum 39 bzw. 40 zu den zugewandten Wandpartien 41,42 der Tragsäule 6 gebildet wird.

Würden diese Zwischenräume 39,40 fehlen, wüden die Steckstutzenseiten 35,36 auch in diesem mittleren Bereich an der Innenseite der Tragsäule 6 anliegen. In diesem Falle würde die Gefahr bestehen, dass die Steckstutzenseiten beim Festziehen der Spannschrauben 22 infolge der Spreizwirkung die Wandpartien 41,42 der Tragsäule 6 etwas ausbauchen, so dass sich die Außengestalt der Tragsäule 6 entsprechend verbreitern würde. Dies hätte beispielsweise zur Folge, dass man die Sitzeinrichtung 7 möglicherweise nicht mehr ganz nach unten verstellen kann, da die Verbindungshülse 11 nicht über den verbreiterten unteren Tragsäulen-Endbereich passt.

Der dargestellte Stuhl ist insbesondere auch für Kinder und Jugendliche gedacht, so dass die Sitzeinrichtung 7 bis ganz nach unten verstellbar sein soll.

Der Steckstutzen 19 ist zweckmäßigerweise ein Metallblech-Biegeteil. Die Längsränder 43 des Metallblech-Biegeteils (die beiden Längsränder sind aus Fig. 3 ersichtlich, wurden dort der Übersichtlichkeit wegen jedoch nicht näher bezeichnet, so dass die Bezugszahl 43 nur in Fig. 2 bei dem in dieser Figur sichtbaren Längsrand eingetragen ist) liegen sich am Längsschlitz 34 gegenüber, so dass der Schlitz 34 von den beiden Längsrändern 43 gebildet wird. DerSchlitz 34 weist im Querschnitt eine sich zu den Spannmitteln 21 hin erweiternde Keilgestalt auf.

## Patentansprüche

1. Stuhl, mit einem Fußteil (2), an dem ein Steckstutzen (19) angeordnet ist, und einer vom Fußteil (2) hochstehenden Tragsäule (6) zum, insbesondere höhenverstellbaren, Halten einer Sitzeinrichtung (7), wobei die Tragsäule (6) mit dem Steckstutzen (19) zusammengesteckt und mittels Spannmittel (21) von außen her lösbar am Steckstutzen (19) festgelegt ist, **dadurch gekennzeichnet, dass** die Tragsäule (6) auf den Steckstutzen (19) gesteckt ist, dass die Spannmittel (21) an der Tragsäule (6) gelagert sind, die Tragsäule (6) durchgreifen, einseitig am Steckstutzen (19) angreifen und den Steckstutzen (19) mit der Innenseite der Tragsäule (6) verspannen, und dass der Steckstutzen (19) an seinem im Querschnitt der Angriffsseite (24) der Spannmittel (21) entgegengesetzten Endbereich (25) eine sich zum Ende hin verjüngende Gestalt aufweist, wobei sich die Innenseite der Tragsäule (6) in ähnlicher Weise verjüngt, so dass sich der Steckstutzen (19) beim Verspannen in der Tragsäule (6) verkeilt.

2. Stuhl nach Anspruch 1, **dadurch gekennzeichnet, dass** die Spannmittel (21) einseitig am hohl ausgebildeten Steckstutzen (19) angreifen und der Steckstutzen (19) an seiner Angriffsseite (24) beiderseits der Spannmittel 1 (21) jeweils einen im Querschnitt schräg oder gebogen verlaufenden Wandabschnitt (30,31) aufweist, so dass bei wirksamen Spannmitteln (21) der Steckstutzen (19) beiderseits der Spannmittel (21) durch Spreizwirkung gegen die Tragsäulen-Innenseite gedrückt wird.

3. Stuhl nach Anspruch 2, **dadurch gekennzeichnet, dass** der Steckstutzen (19) an seiner Angriffsseite (24) in Höhenrichtung längsgeschlitzt ist.

4. Stuhl nach Anspruch 2 oder 3, **dadurch gekennzeichnet, dass** die Steckstutzenseiten (35,36), die von der Angriffsseite (24) zum entgegengesetzten Endbereich (25) des Steckstutzens (19) verlaufen, in ihrem mittleren Bereich (37,38) eingebaucht sind, so dass ein Abstand zu den zugewandten Wandpartien (41,42) der Tragsäule (6) gebildet wird.

5. Stuhl nach einem der Ansprüche 1 bis 4, **dadurch gekennzeichnet, dass** die Tragsäule (6) einen im wesentlichen oval- oder ellipsenartigen Querschnitt aufweist, wobei die Spannmittel (21) an einem der beiden Hauptscheitel gelagert sind.

6. Stuhl nach einem der Ansprüche 1 bis 5, **dadurch gekennzeichnet, dass** die Spannmittel (21) von mindestens einer gegen den Steckstutzen (19) drückenden Spannschraube (22) gebildet werden.

7. Stuhl nach einem der Ansprüche 1 bis 6, **dadurch gekennzeichnet, dass** der Steckstutzen (19) ein Metallblech-Biegeteil ist.

## Claims

1. Chair with a foot part (2) on which a plug-in fitting (19) is located, and with a supporting column (6) projecting upwards from the foot part (2) to hold, in particular in a vertically adjustable manner, a seat device (7), wherein the supporting column (6) is plugged together with the plug-in fitting (19) and releasably located on the plug-in fitting (19) from the outside by clamping means (21), **characterised in that** the supporting column (6) is pushed onto the plug-in fitting (19), **in that** the clamping means (21) are mounted on the supporting column (6), pass through the supporting column (6), act on one side of the plug-in fitting (19) and clamp the plug-in fitting (19) to the inside of the supporting column (6), and **in that** the plug-in fitting (19) has a shape tapering towards the end in the end area (25) which is opposite the application side (24) of the clamping means (21) if viewed in cross-section, the interior of the supporting column (6) tapering in a similar way, so that the plug-in fitting (19) is wedged into the supporting column (6) in the clamping process.

2. Chair according to claim 1, **characterised in that** the clamping means (21) act on one side of the hollow plug-in fitting (19) and **in that** the plug-in fitting (19) has a wall section (30, 31) with an inclined or bent cross-section on its application side (24) on both sides of the clamping means (21), so that the plug-in fitting (19) is pushed against the interior of the supporting column on both sides of the clamping means (21) as a result of a spreading effect whenever the clamping means (21) are effective.

3. Chair according to claim 2, **characterised in that** the plug-in fitting (19) is slotted longitudinally on its application side (24) in the vertical direction.

4. Chair according to claim 2 or 3, **characterised in that** the plug-in fitting sides (35, 36) extending from the application side (24) to the opposite end area (25) of the plug-in fitting (19) have inward bulges in their central area (37, 38), resulting in a distance from the adjacent wall sections (41, 42) of the supporting column (6).

5. Chair according to any of claims 1 to 4, **characterised in that** the supporting column (6) has an essentially oval or elliptical cross-section, the clamping means (21) being mounted on one of the two main apices.

6. Chair according to any of claims 1 to 5, **characterised in that** the clamping means (21) are represented by at least one clamping bolt (22) pressing against the plug-in fitting (19).

7. Chair according to any of claims 1 to 6, **characterised in that** the plug-in fitting (19) is a sheet metal bent part.

## Revendications

1. Chaise, avec une partie de pied (2) sur laquelle est placé un embout d'enfichage (19), et une colonne porteuse (6) se dressant depuis la partie de pied (2) pour porter, en particulier de manière réglable en hauteur, un dispositif d'assise (7), la colonne porteuse (6) étant enfichée avec l'embout d'enfichage (19) et fixée à l'embout d'enfichage (19) par des moyens de serrage (21) d'une manière amovible de l'extérieur, **caractérisée en ce que** la colonne porteuse (6) est enfichée sur l'embout d'enfichage (19), **en ce que** les moyens de serrage (21) sont montés sur la colonne porteuse (6), saisissent la colonne porteuse (6), se mettent en prise d'un côté sur l'embout d'enfichage (19) et serrent l'embout d'enfichage (19) avec la face intérieure de la colonne porteuse (6), et **en ce que** l'embout d'enfichage (19) présente une forme effilée vers l'extrémité dans la zone d'extrémité (25) opposée en coupe transversale au côté de prise (24) des moyens de serrage (21), la face intérieure de la colonne porteuse (6) étant effilée de manière similaire, de sorte que l'embout d'enfichage (19) se coince dans la colonne porteuse (6) lors du serrage.

2. Chaise selon la revendication 1, **caractérisée en ce que** les moyens de serrage (21) se mettent en prise d'un côté sur l'embout d'enfichage (19) réalisé creux et l'embout d'enfichage (19) présente sur sa face de prise (24), des deux côtés des moyens de serrage (21), à chaque fois une section de paroi (30, 31) d'extension inclinée ou incurvée en coupe transversale, de sorte que, quand les moyens de serrage (21) sont actifs, l'embout d'enfichage (19) est pressé contre la face intérieure de la colonne porteuse des deux côtés des moyens de serrage (21) par un effet d'écartement.

3. Chaise selon la revendication 2, **caractérisée en ce que** l'embout d'enfichage (19) est fendu longitudinalement dans la direction de la hauteur sur son côté de prise (24).

4. Chaise selon la revendication 2 ou 3, **caractérisée en ce que** les côtés (35, 36) de l'embout d'enfichage qui vont du côté de prise (24) à la partie d'extrémité opposée (25) de l'embout d'enfichage (19) sont creusés dans leur partie centrale (37, 38), de sorte qu'une distance est instaurée par rapport aux parties de paroi (41, 42) de la colonne porteuse (6) situées en vis-à-vis.

5. Chaise selon l'une des revendications 1 à 4, **caractérisée en ce que** la colonne porteuse (6) présente une section transversale pour l'essentiel en forme d'ovale ou d'ellipse, les moyens de serrage (21) étant montés sur l'un des deux sommets principaux.

6. Chaise selon l'une des revendications 1 à 5, **caractérisée en ce que** les moyens de serrage (21) sont formés par au moins une vis de serrage (22) appuyant contre l'embout d'enfichage (19).

7. Chaise selon l'une des revendications 1 à 6, **caractérisée en ce que** l'embout d'enfichage (19) est une pièce en tôle métallique pliée.
